Europäisches Patentamt

European Patent Office

Office européen des brevets

(19)

(11) Veröffentlichungsnummer: **0 233 505 B1**

(12) **EUROPÄISCHE PATENTSCHRIFT**

(45) Veröffentlichungstag der Patentschrift: **23.05.90**

(51) Int. Cl.⁵: **B 62 D 21/02**, B 62 D 25/08

(21) Anmeldenummer: **87100904.9**

(22) Anmeldetag: **23.01.87**

(54) **Rahmenanordnung eines vorzugsweise mit einem selbsttragenden Wagenkasten versehenen Personenkraftwagens.**

(30) Priorität: **06.02.86 DE 3603706**

(43) Veröffentlichungstag der Anmeldung:
**26.08.87 Patentblatt 87/35**

(45) Bekanntmachung des Hinweises auf die
Patenterteilung:
**23.05.90 Patentblatt 90/21**

(84) Benannte Vertragsstaaten:
**DE ES FR GB IT SE**

(56) Entgegenhaltungen:
**AT-B- 180 488**
**FR-A- 980 602**

(73) Patentinhaber: **AUDI AG**
**Auto-Union-Strasse 1 Postfach 220**
**D-8070 Ingolstadt (DE)**

(72) Erfinder: **Uebelstädt, Manfred**
**Neustrasse 19**
**D-8071 Wettstetten (DE)**
Erfinder: **Wätzold, Peter**
**Max-Emanuel-Strasse 9**
**D-8071 Wettstetten (DE)**
Erfinder: **Heidl, Roland**
**Lortzingstrasse 21**
**D-8071 Lenting (DE)**

(74) Vertreter: **Le Vrang, Klaus**
**AUDI AG Postfach 220 Patentabteilung I/EQP**
**D-8070 Ingolstadt (DE)**

Courier Press, Leamington Spa, England.

**Beschreibung**

Die Erfindung bezieht sich auf eine Rahmenanordnung eines vorzugsweise mit einem selbsttragenden Wagenkasten versehenen Personenkraftwagens gemäß Oberbegriff des Patentanspruches 1.

Eine gattungsgemäße Rahmenanordnung ist bereits aus der AT-B-1 80 488 bekannt. Die DE-B-10 04 496 zeigt eine ähnlich aufgebaute Rahmenanordnung. Gemäß diesem Stand der Technik ist es möglich, einen von dem eigentlichen Fahrzeugrahmen bzw. von dem selbsttragenden Wagenkasten getrennten Vorderrahmen vorzusehen, auf dem beispielsweise die aus Motor und Getriebe bestehende Antriebseinheit zusammen mit der Vorderradaufhängung angeordnet werden kann. Dieser, mit der Antriebseinheit und sonstigen Aggregaten versehene Vorderahmen kann auf sehr einfache Weise entlang der Personenkraftwagen-Hauptfertigungsstraße an dem selbsttragenden Wagenkasten befestigt werden.

Der konstruktive Aufbau bietet zunächst den Vorteil, daß auf diese Weise die Herstellung von Kraftfahrzeugen unter Einsatz einer relativ kurzen Hauptfertigungsstraße möglich ist, wohingegen es aber dieser Bauweise als nachteilig anzulasten ist, daß die so gestalteten Kraftfahrzeuge den gestellten Sicherheitsanforderungen nicht optimal genügen. So können beispielsweise bei Frontalzusammenstößen die den Vorderrahmen mit dem selbsttragenden Wagenkasten verbindenden Verbindungsbolzen durch auf sie wirkende große Querkräfte eventuell abgeschert werden. Die ohnehin sehr ungünstig gestaltete Knautschzone würde damit nicht voll wirksam werden können. Aufgrund der starren Verbindung der beiden Längsträger durch den vorderen Querträger ist gerade dort ein in sich starres System geschaffen worden, wo es eigentlich vielmehr auf Nachgiebigkeit und Verformbarkeit ankommt. Dadurch werden zwangsläufig stets beide Längsträger in Mitleidenschaft gezogen und es wird, da jeder Längsträger auch gleichzeitig der Radaufhängung dient, die Achsgeometrie nachhaltig beeinflußt. Nachteilig bei der Anordnung gemäß der DE-C-10 04 496 ist auch die gewählte Position der jeweiligen Radaufhängung. Bei auftretenden Querkräften werden diese äußerst ungünstig, nämlich mittig, auf den gerade betroffenen Längsträger eingeleitet, der dann, als Biegeträger wirkend, die gesamte Belastung aufzunehmen hat. Dies kann sich unter anderem nachteilig auf das Fahrverhalten auswirken.

Die vorstehend erwähnten Nachteile in bezug auf den die beiden Längsträger verbindenden vorderen Querträger gelten auch in gewisser Weise für die weiterhin zu nennende DE-C-24 08 548, ohne daß bei der dort beschriebenen Vorrichtung wesentliche Vorteile für die Fahrzeug-Montage zu verzeichnen wären. Als störend erweisen sich in diesem Zusammenhang die beiden Brücken mit dem sie verbindenden Querträger.

Die ebenfalls zu nennende DE-A-28 45 548 zeigt ein sehr aufwendig gestaltetes zwischen Stoßfänger- und Fahrgastzelle sich erstreckendes einteiliges Trägerwerk welches sich wie insbesondere die Fig 3 in dieser Druckschrift zeigt, insgesamt verformt. Dies gestaltet die nach einem Frontalzusammenstoß eventuell noch vorzunehmenden Reperaturarbeiten äußerst kostenintensiv. Die Aufspaltung der bei einem Crash auftretenden Kräfte erscheint überdies nicht optimal gelöst.

Aus der DE-A-18 16 428 sowie der DE-C-26 20 927 sind letztlich Vorderrahmenanordnungen bekannt geworden, die linke und rechte Längsträger aufweisen, die mit den übrigen Rahmenteilen der Fahrzeugkarosserie unlösbar verbunden sind und mittlere und vordere, die beiden Längsträger verbindende Querträger aufweisen, dabei aber nicht die fertigungstechnischen Vorteile des gattungsgemäßen Standes der Technik bieten.

Abgesehen von dem Umstand, daß nun die bereits erwähnten Querkräfte (z. B. bei Kurvenfahrten) günstiger auf beide Längsträger verteilt werden können, weisen die Anordnungen in diesen beiden Druckschriften im wesentlichen die gleichen Nachteile auf, die bereits in Zusammenhang mit dem eingangs genannten Stand der Technik erwähnt worden sind.

Ausgehend davon ist es die Aufgabe der vorliegenden Erfindung, eine Rahmenanordnung zu schaffen, die wesentliche Vorteile für die Kraftfahrzeug-Montage bietet und dabei insbesondere eine optimale und exakt definierte Abgrenzung zwischen einer Knautschzone und einer den Fahrzeuginsassen schützenden Sicherheitszone ermöglicht.

Diese Aufgabe wird mit einer Rahmenanordnung gelöst, die durch die Merkmale des Patentanspruches 1 gekennzeichnet ist. Mit der erfindungsgemäßen Vorgehensweise ist auch auf besonders vorteilhafte Weise eine definierte Aufspaltung der bei einem Crash auftretenden Kräfte möglich, so daß auch eine darauf gerichtete zuverlässige Auslegung d. h. Bemessung dieser Bauteile möglich ist. Jede Längsträgereinheit weist dabei im Bereich der Achsaufhängung einen Knotenpunkt auf, in den drei tragende Baueinheiten, nämlich der hintere Teil eines jeden Längsträgers, ein die H-Form bildender Querträger sowie die Anschlußstelle eines Längsrahmens einmünden und so ein äußerst stabiles "Dreibein" bilden. Die Knautschzone wird schließlich durch den jeweils vom Knotenpunkt ausgehenden und nach vorne (in Fahrtrichtung) gerichteten vorderen Teil eines jeden Längsträgers bestimmt. Durch die höhere Steifigkeit des Rahmens im Bereich jeder Radaufhängung ist eine optimale Aufnahme von Querkräften möglich. Dies unterstützt unter anderem auch eine exakte Radführung und führt zu einem besseren Lenkverhalten. Da überdies durch die Verformung eines Längsträgers im Bereich der Knautschzone nicht zwangsläufig auch der jeweils andere Längsträger und damit die Achsgeometrie der Radaufhängung beschädigt wird, kann sich dies auf die Reperaturkosten günstig auswirken. Durch den verwindungsstreifen und damit auch wenig zu Schwingungen neigenden Verbund werden letztendlich auch die akustischen Eigenschaften positiv beeinflußt. Ein Ausführungsbeispiel der Erfindung ist nachstehend anhand der Zeichnung beschrieben. Diese zeigt im Einzelnen in

Fig. 1 eine schematisierte Ansicht eines Teiles der Bodengruppe eines Personenkraftwagens mit einem daran befestigten Längsträger der erfindungsgemäßen Rahmenanordnung,

Fig. 2 eine perspektivische Darstellung der Vorderrahmens und

Fig. 3 ein abstrahiertes Kraftflußschema zur Verdeutlichung der Aufteilung der Kräfte bei einem teilweise seitlich oder ausschließlich frontal wirkenden Zusammenstoß.

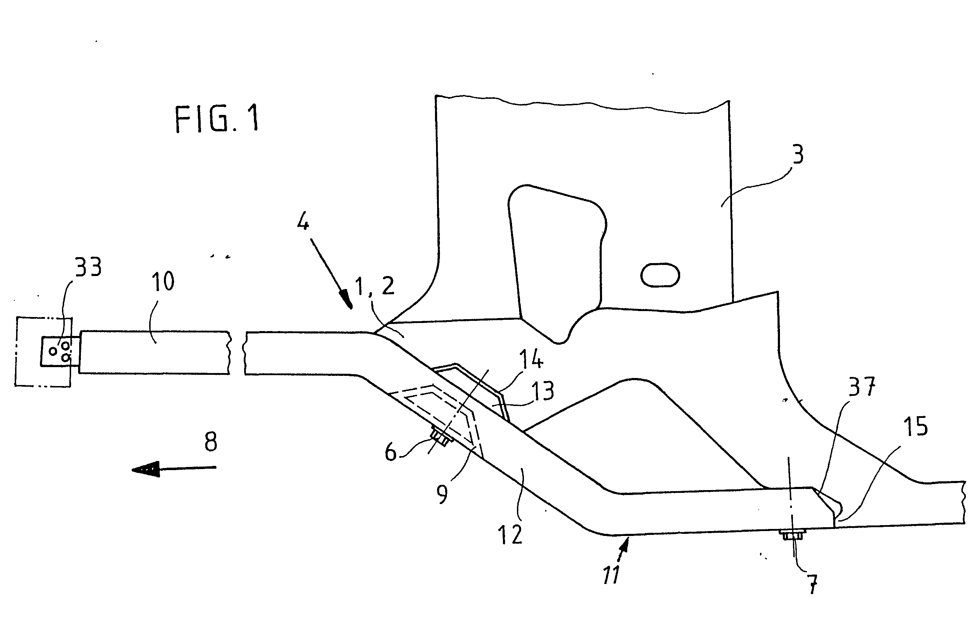

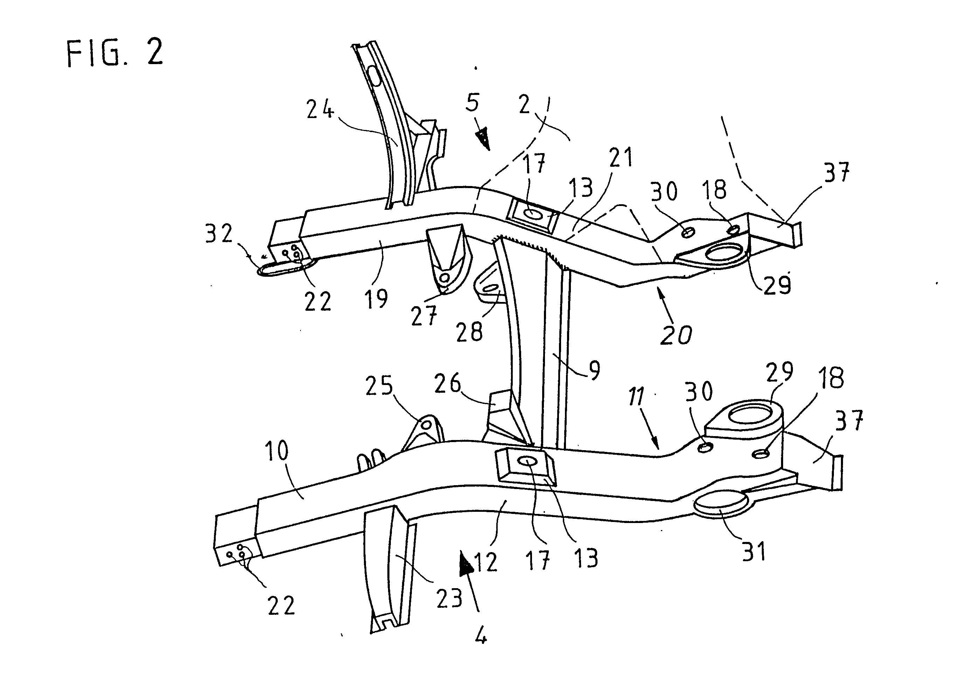

Fig. 1 zeigt einen linken Längsrahmen 1 sowie einen Teil eines diesen mit einem entsprechenden rechten Längsrahmen 2 (Fig. 2) verbindenden Querrahmens 3. Dabei bilden die Rahmenteile 1 - 3 einen Teil der Bodengruppe eines selbsttragenden Wagenkastens eines Personenkraftwagens. An jeden der beiden Längsrahmen 1, 2 ist ein Längsträger 4, 5 mittels zweier Verbindungsbolzen 6, 7 in Fahrtrichtung 8 gesehen an einer vorderen, etwas höher gelegenen Verbindungsstelle sowie an einer hinteren, tiefer liegenden Verbindungsstelle befestigt. Über dem Querrahmen 3 der Bodengruppe besteht an dieser Stelle somit auch eine gewisse Verbindung zwischen den beiden Längsträgern 4, 5. Beide Längsträger 4, 5 sind über einen jeweils im Bereich des vorderen Verbindungsbolzens 6 angreifenden Querträger 9 miteinander verbunden. Diese Verbindung kann z. B. wahlweise als Schraub- oder Schweißverbindung ausgeführt sein, wobei insbesondere der Schraubverbindung der Vorteil zukommt, daß gerade bei einem teilweise seitlich wirkenden Zusammenstoß beispielsweise auf einfache Weise lediglich einer der Längsträger 4, 5 ausgetauscht werden kann, ohne daß dabei in die Achsgeometrie der anderen Seite eingegriffen werden müßte.

Jeder Längsträger 4, 5 weist in Fahrtrichtung 8 gesehen parallel und dabei versetzt zueinander verlaufende vordere und hintere Teile 10, 11, 19, 20 auf, wobei der hintere Teil 11, 20 in Fahrtrichtung 8 gesehen überdies einen schräg nach oben verlaufenden Abschnitt 12, 21 aufweist. Wegen der Schrägung dieses Abschnittes 12, 21 verlaufen auch die Längsachsen der beiden Verbindungsbolzen 6, 7 unter einem Winkel zueinander so daß sich beim Anziehen der Verbindungsbolzen 6, 7 ein steifer Verbund zwischen den Längsrahmen 1, 2 der Bodengruppe und den Längsträgern 4, 5 der Rahmenanordnung ergibt. Der aus Längsträger 4, 5 und Querträger 9 gebildete Vorderrahmen ist somit auf einfache Weise zusammen mit den von ihm getragenen Aggregaten als komplette Baugruppe montierbar.

Zusätzlich zu der kraftschlüssigen Verbindung mittels Verbindungsbolzen 6, 7 ist außerdem eine formschlüssige Verbindung dergestalt vorgesehen, daß jeder Längsträger 4, 5 an der Innenseite des schräg verlaufenden Abschnittes 12, 21 zusätzlich zu der Durchgangsbohrung 17 des Verbindungsbolzens 6 einen beispielsweise pyramidenstumpfförmigen Absatz 13 aufweist, der in eine entsprechende, ebenfalls pyramidenstumpfförmige Aussparung 14 des jeweiligen Längsrahmens 1, 2 hineinragt. Im Bereich des hinteren Verbindungsbolzens 7 weist jeder Längsrahmen 1, 2 außerdem einen Absatz 15 auf, an den die Stirnfläche 37 des hinteren Teiles 11, 20 eines jeden Längsträger 4, 5 in etwa zur Anlage kommt. Somit können evtl. bei Zusammenstößen auftretende Scherkräfte von den Verbindungsbolzen 6, 7 ferngehalten werden.

In Fig. 2 nun ist die erfindungsgemäße Rahmenanordnung als gesonderte Baugruppe perspektivisch dargestellt. Dabei ist die aus den beiden Längsträgern 4, 5 sowie dem Querträger 9 gebildete H-Form erkennbar. Auch ist weiterhin einer der Längsrahmen 2 angedeutet. In dieser Darstellung ist auch ganz besonders deutlich der pyramidenstumpfförmige Ansatz 13 mit der Durchgangsbohrung 17 für den Verbindungsbolzen 6 erkennbar. Ebenfalls dargestellt ist die Durchgangsbohrung 18 für den jeweils hinteren Verbindungsbolzen 7.

Sowohl die beiden Längsträger 4, 5 als auch der Querträger 9 sind als Blechpressteile hergestellt, wobei gegebenenfalls eine voneinander abweichende Werkstoffauswahl für die Bauteile ohne weiteres getroffen werden kann. Diese kann sich insbesondere aus Festigkeitsgründen ergeben, je nachdem welche Kräfte auf die einzelnen Bauelemente bei einem Zusammenstoß einwirken können bzw. welcher Grad an Verformung gewünscht ist. Unter anderem ist auch zu berücksichtigen, welche statischen und dynamischen Belastungen sich aufgrund der an dem Vorderrahmen befestigten bzw. davon getragenen Baugruppen, insbesondere Motor und Getriebe, ergeben.

Im gezeigten Ausführungsbeispiel ist der Querträger 9 an die beiden Längsträger 4, 5 angeschweißt, wobei, wie bereits erwähnt, ohne weiteres auch eine Schraubverbindung vorgesehen werden kann. Die die H-Form bildenden Bauteile 9, 10, 11, 19, 20 weisen weiterhin Bohrungen 22, 30, 31 zum Befestigen oder für den Durchtritt verschiedener Bauelemente sowie weiterhin Stege 23, 24 und Haltebügel 25-29 zur Aufnahme weiterer Baugruppen, insbesondere Motor und Getriebe, innerhalb des Motorraumes auf. An zumindest einem der Längsträger 5 ist an dessen vorderem Teil 19 ein Abschlepphaken 32 befestigt, wobei außerdem an den beiden Stirnflächen der vorderen Teile 19 ein Stoßfänger 33 des Kraftfahrzeuges befestigt sein kann. Dieser dient dabei aber nicht als zusätzliche festigkeitsmäßige Verbindung zwischen beiden Längsträgern 4, 5, d. h. es werden durch ihn keine nennenswerte Querkräfte übertragen.

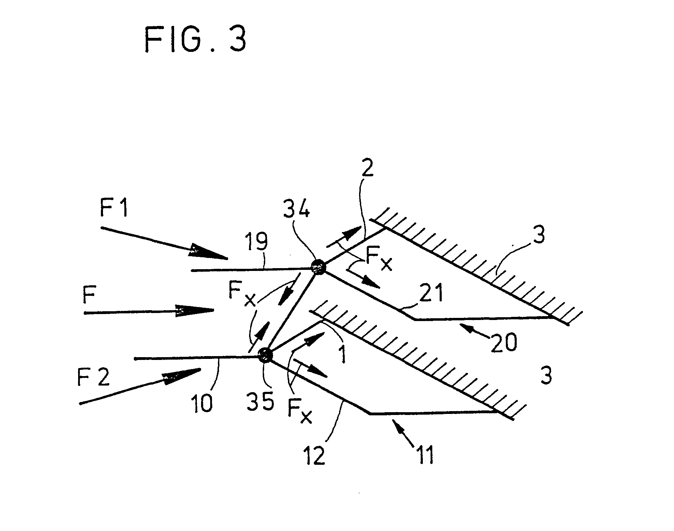

Fig. 3 zeigt zur Veranschaulichung des Kräfteverlaufes bei einem Zusammenstoß die Rahmenanordnung bzw. deren schematisierte Darstellung als Stäbe eines Fachwerkes. Je nachdem, ob es sich um einen Frontalzusammenstoß (F) oder um einen mehr von der Seite kommenden Aufprall

($F_1$, $F_2$) handelt, werden unterschiedlich große Stabkräfte (Kraftpfeile $F_x$) und Momente auf die Bauteile einwirken. Die beiden vorderen Teile 10, 19 der Längsträger 4, 5 bestimmen im wesentlichen die Knautschzone und werden deshalb auch eine entsprechende Verformung erleiden. Jeder vordere Teil 10, 19 mündet dabei in einen Knotenpunkt 34, 35, der jeweils aus dem schrägen Abschnitt 12, 21 des hinteren Längsträger-Teiles 11, 20, dem daran angreifenden Längsrahmen 1, 2 sowie dem Querträger 9 gebildet wird und dabei ein äußerst steifes System bildet, welches die auftretenden Kräfte und Momente sicher aufnimmt. Der Knotenpunkt 34, 35 bestimmt gleichzeitig den Beginn der Sicherheitszone für den Fahrzeuginsassen.

Mit der erfindungsgemäßen Rahmenanordnung ist somit eine Möglichkeit gegeben, eine definierte Aufspaltung der bei einem Zusammenstoß auftretenden Kräfte erreichen zu können, wobei weiterhin eine exakte Abgrenzung zwischen einer die Bewegungsenergie aufnehmenden Knautschzone und einer in Fahrtrichtung 8 gesehen vor dem Fahrgastraum liegenden Sicherheitszone gewährleistet ist. Durch Anordnung der Vorderradaufhängung im Bereich des Querträgers 9 erreicht die Rahmenanordnung auch für sich daraus ergebende Querkräfte eine optimale Stabilität. Eine beanspruchungsgemäße Dimensionierung, d. h. nach Größe des verwendeten Motors und nach dem gewünschten Crash-Verhalten, sowie eine entsprechende Werkstoffauswahl der Bauteile ist außerdem möglich.

Bei der Werkstoffauswahl kann auch der Rostschutz zusätzliche Berücksichtigung finden.

**Patentansprüche**

1. Rahmenannordnung eines vorzugsweise mit einem selbsttragenden Wagenkasten versehenen Personenkraftwagens, mit einer aus einzelnen Rahmenteilen (1, 2, 3) aufgebauten Bodengruppe, an der im vorderen Bereich mittels Verbindungselementen (6, 7, 13, 14, 15) zwei, einen Vorderrahmen bildende Längsträger (4, 5) befestigbar sind, die im Bereich der Vorderradaufhängung über einen sie verbindenden Querträger (9) in der Weise gekoppelt sind, daß ein im wesentlichen H-förmiger, als in sich geschlossene Baueinheit montierbarer und der Auflage der Antriebseinheit und/oder der Vorderradaufhängung dienender Vorderrahmen entsteht und die beiden Längsträger (4, 5) ausgehend von den Anschlußstellen des Querträgers (9) in einen in Fahrtrichtung (8) gesehen vorderen Teil (10, 19) und einen hinteren Teil (11, 20) aufgeteilt werden, dadurch gekennzeichnet, daß jeweils im Bereich der Anschlußstellen des Querträgers (9) ein Rahmenteil (Längsrahmen 1, 2) der Bodengruppe an dem Vorderrahmen angreift, so daß an dieser Anschlußstelle durch den Querträger (9), den hinteren Teil (11, 20) des Längsträgers (4, 5) und den Rahmenteil (Längsrahmen 1, 2) ein aus drei Bauteilen gebildeter Knotenpunkt (34, 35) entsteht, der die Basis für den in Fahrtrichtung (8) gerichteten, im wesentlichen die Knautschzone des Personenkraftwagens darstellenden, frei abkragenden vorderen Teil (10, 19) des Längsträgers (4, 5) bildet, während der hintere Längsträger-Teil (11, 20) an einer weiteren Anschlußstelle an Rahmenteilen (Längsrahmen 1, 2) der Bodengruppe befestigt ist.

2. Rahmenanordnung nach Patentanspruch 1, dadurch gekennzeichnet, daß der hintere Teil (11, 20) des Längsträgers (4, 5) einen in Fahrtrichtung (8) gesehen schräg nach oben verlaufenden Abschnitt (12, 21) aufweist, wobei die den Knotenpunkt (34, 35) bildenden Befestigungsstellen von Längsrahmen (1, 2) und Querträger (9) im Bereich der Übergangsstelle dieses schrägen Abschnittes (12, 21) in den vorderen Teil (10, 19) des Längsträgers (4, 5) sich befinden.

3. Rahmenanordnung nach Patentanspruch 1, dadurch gekennzeichnet, daß der Querträger (9) mittels Schweißverbindung mit den Längsträgern (4, 5) verbunden ist.

4. Rahmenanordnung nach Patentanspruch 1, dadurch gekennzeichnet, daß der Querträger (9) mittels Schraubverbindung mit den Längsträgern (4, 5) verbunden ist.

5. Rahmenanordnung nach Patentanspruch 1, dadurch gekennzeichnet, daß ergänzend zu der Befestigung der Längsträger (4, 5) dienenden Verbindungsbolzen (6, 7) weitere Aufnahmeelemente (13, 14, 15) zwischen Längsträgern (4, 5) und Längsrahmen (1, 2) vorgesehen sind, die im wesentlichen entgegengesetzt zur Fahrtrichtung (8) gerichtete und auf die Längsträger (4, 5) einwirkende Kräfte (F, $F_1$, $F_2$) formschlüssig auf den Längsrahmen (1, 2) übertragen.

6. Rahmenanordnung nach Patentanspruch 1, dadurch gekennzeichnet, daß Längsträger (4, 5) und Querträger (9) Bohrungen (22, 30, 31), Stege (23, 24) und Haltebügel (25 - 29) zum Befestigen und zur Halterung von Baugruppen des Motorraumes aufweisen.

**Revendications**

1. Système de châssis d'une voiture particulière munie de préférence d'une carrosserie monocoque, comprenant un ensemble de plancher qui est constitué par des éléments de châssis individuels (1, 2, 3) et auquel peuvent être fixés dans la région antérieure, au moyen d'éléments d'assemblage (6, 7, 13, 14, 15), deux longerons (4, 5) qui constituent un châssis avant et qui sont accouplés dans la région de la suspension des roues avant au moyen d'une traverse (9) qui les relie, de telle manière qu'il en résulte un châssis avant qui a sensiblement la forme d'un H, peut être monté sous forme d'unité modulaire autonome et sert de support pour le groupe moteur et/ou la suspension des roues avant, et de telle manière que les deux longerons (4, 5) soient partagés, à partir des points d'assemblage de la traverse (9), en une partie avant (10, 19) et une partie arrière (11, 20) en considérant le sens de marche (8), caractérisé en ce que dans la région de chacun des points d'assemblage de la traverse (9), un élément de châssis (châssis longitudinal 1, 2) de l'ensemble de plancher s'applique sur le châssis avant, de sorte qu'il soit créé en ce point d'assemblage, par la traverse (9), la partie arrière (11, 20) du longeron (4, 5) et l'élément de châssis (châssis longitudinal 1, 2), un noeud d'assemblage (34, 35) qui est formé de trois éléments de construction et qui constitue la base pour la partie avant (10, 19) du longeron (4, 5) dirigee dans le sens de marche, (8), ladite partie avant représentant essentiellement la zone déformable de la voiture particulière et s'étendant librement en porte a faux, tandis que la partie arrière (11, 20) du longeron est fixée en un autre point d'assemblage à des éléments de châssis (châssis longitudinal 1, 2) de l'ensemble de plancher

2. Système de châssis selon la revendication 1, caractérisé en ce que la partie arriere (11, 20) du longeron (4, 5) présente un segment (12, 21) qui s'étend obliquement vers le haut en considérant le sens de marche (8), les points de fixation du châssis longitudinal (1, 2) et de la traverse (9), qui forment le noeud d'assemblage (34, 35), se trouvant dans la region du point de transition entre ce segment oblioue (12, 21) et la partie avant (10, 19) du longeron (4, 5).

3. Systeme de châssis selon la revendication 1, caractérisé en ce que la traverse (9) est fixée par assemblage soudé aux longerons (4, 5).

4. Systeme de châssis selon la revendication 1, caractérisé en ce que la traverse (9) est fixée par assemblage par vis aux longerons (4, 5).

5. Système de châssis selon la revendication 1, caractérisé en ce qu'en complément de boulons d'assemblage (6, 7) servant à la fixation des longerons (4, 5), il est prévu des éléments de logement supplémentaires (13, 14, 15) entre les longerons (4, 5) et les châssis longitudinaux (1, 2), éléments qui transmettent aux châssis longitudinaux (1, 2), par, emboîtement, les forces $(F, F_1, F_2)$ qui agissent sur les, longerons (4, 5) et qui sont dirigées sensiblement à l'oppose du sens de marche (8).

6. Système de châssis selon la revendication 1, caracterisé en ce que les longerons (4, 5) et la, traverse (9) présentent des forures (22, 30, 31), des étais (23, 24) et des étriers de retenue (25-29) pour la fixation et pour le maintien d'ensembles de construction du compartiment du moteur.

**Claims**

1. Frame arrangement for a motor car provided with a self-supporting car body, with an underbody comprising individual frame parts (1, 2, 3), to which there can be secured at the front region by means of connecting elements (6, 7, 13, 14, 15) two longitudinal members (4, 5) which form a front frame and which in the region of the front wheel suspension are so coupled by means of a cross-member (9) connecting them that a front frame is formed which is substantially H-shaped, is assemblable as a self-contained unit, and which serves to support the drive unit and/or the front wheel suspension, and the two longitudinal members (4, 5), starting from the connection points of the cross-member (9), are divided into a front portion (10, 19) as seen in the direction of travel (8) and a rear portion (11, 20), characterised in that in the region of each of the connection points of the cross-member (9) a frame part (longitudinal frame 1, 2) of the underbody is attached to the front frame, so that at this connection point a junction (34, 35) formed of three components is formed by the cross-member (9), the rear portion (11, 20) of the longitudinal member (4, 5) and the frame part longitudinal frame (1, 2), and constitutes the base for the freely cantilevered-out front portion (10, 19) of the longitudinal member (4, 5) representing substantially the crumple zone of the motor car, whilst the rear longitudinal member portion (11, 20) is secured at a further connection point to frame parts (longitudinal frames 1, 2) of the underbody.

2. Frame arrangement according to claim 1, characterised in that the rear portion (11, 20) of the longitudinal member (4, 5) has a section (12, 21) which extends upwards at an inclination as seen in the direction of travel (8), and those securing points of longitudinal frames (1, 2) and cross-member (9) which form the junction (34, 35) are situated in the region of the transition zone from this inclined section (12, 21) to the front portion (10, 19) of the longitudinal member (4, 5).

3. Frame arrangement according to claim 1, characterised in that the cross-member (9) is connected to the longitudinal members (4, 5) by a welded connection.

4. Frame arrangement according to claim 1, characterised in that the cross-member (9) is connected to the longitudinal members (4, 5) by a screwing connection.

5. Frame arrangement according to claim 1, characterised in that, additionally to the connecting bolts (6, 7) used for fastening the longitudinal members (4, 5), further holding elements (13, 14, 15) are provided between longitudinal members (4, 5) and longitudinal frames (1, 2) and transmit, with a shape-locking connection, to the longitudinal frames (1, 2) forces $(F, F_1, F_2)$ acting on the longitudinal members (4, 5) and directed substantially opposite to the direction of travel (8).

6. Frame arrangement according to claim 1, characterised in that longitudinal members (4, 5) and crossmember (9) comprise bores (22, 30, 31), arms (23, 24), and mounting lugs (25-29) for securing and supporting sub-assemblies of the engine space.

FIG. 1

EP 0 233 505 B1

FIG. 2

FIG. 3